# EUROPEAN PATENT SPECIFICATION

(11) **EP 1 878 661 B1**
(45) Date of publication and mention of the grant of the patent: **08.07.2009**
(21) Application number: 07112269.1
(22) Date of filing: 11.07.2007
(51) Int. Cl.: B64D 47/08, F42B 15/08, G03B 15/00

(54) **System for attaching an instrument or apparatus to a load carried by an aircraft**
System zur Befestigung eines Instruments oder einer Vorrichtung an einer von einem Flugzeug getragenen Last
Système pour fixer un instrument ou appareil sur une charge portée par un avion

(30) Priority: 12.07.2006 IT TO20060507
(43) Date of publication of application: 16.01.2008
(73) Proprietor: Alenia Aeronautica S.p.A., 80038 Pomigliano D'Arco (Napoli) (IT)
(72) Inventor: Spensatellu, Tonino, 10073 Cirie' (Torino) (IT)
(74) Representative: Rondano, Davide

(56) References cited:
- US-A- 3 689 012
- US-A- 4 318 328
- US-A- 5 426 476
- US-A1- 2003 071 170

## Description

The present invention relates to a system for attaching an instrument or apparatus to a load carried by an aircraft, such as for example a missile.

The invention has been conceived in particular with regard to the attachment of high-speed video-recording apparatuses to a missile mounted onto the wing or the fuselage of an aircraft. However, as will become apparent from the following description, the invention is not limited to such an application at all, but can be used for the attachment of any instrument or apparatus to any load carried by an aircraft.

In order to carry out air-to-air or air-to-ground missile firing tests or load release tests, a high-speed video-recording apparatus is required to be mounted onto the aircraft. At present, the commonly used video-recording apparatus is the so-called Camera Pod, which substantially consists of a casing in the shape of a can containing one or more high-speed cameras and has a plurality of windows through which the camera or cameras can record images relating to the environment outside the casing. The main disadvantage of the Camera Pods is that they have to be specifically manufactured and qualified each for a given type of aircraft. Moreover, the Camera Pods limit the operating capabilities of the aircraft and therefore do not allow to carry out certain kinds of tests.

Another known solution for attaching a high-speed camera to the aircraft consists in mounting the camera onto a support structure attached to the aircraft fuselage. However, also this solution requires a specific support structure for each aircraft and further involves structural changes to the fuselage in order to ensure the required mechanical strength.

It is therefore an object of the present invention to provide a universal attachment system which makes it possible to attach video-recording, acquisition or measure instruments or apparatuses and the like to a load carried by an aircraft, independently of the type of aircraft.

This object is fully achieved according to the invention by virtue of an attachment system having the characteristics set forth in independent Claim 1.

Further advantageous characteristics of the invention are specified in the dependent claims.

The characteristics and the advantages of the invention will become apparent from the following detailed description, given purely by way of non-limiting example with reference to the appended drawings, in which:
Figures 1, 2 and 3 are a perspective view, a side elevation view and a plan view, respectively, which illustrate the attachment of a high-speed camera to a missile carried by an aircraft wing according to the invention;
Figure 4 is a plan view similar to the one of Figure 3, in which the camera is inclined to the longitudinal axis of the missile;
Figure 5 is a cross-section view along line V-V of Figure 2; and

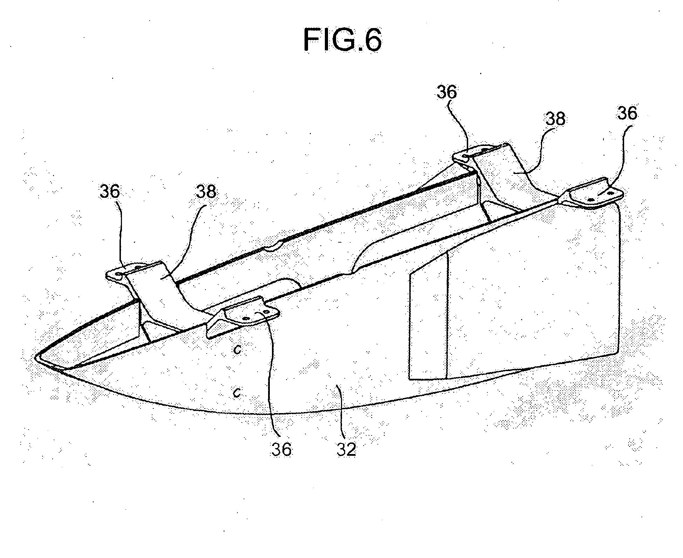

Figure 6 is a perspective view of an aerodynamic element mounted onto the missile in front of the camera.

The following description will be provided with reference to the attachment of a high-speed camera to a missile carried by the wing or the fuselage of an aircraft. However, as already stated before, such an application is to be regarded purely as illustrative and absolutely not limitative of the scope of protection of the patent. A laser targeting system or an acquisition and/or measure electro-optical device may in fact be provided, for example, instead of the camera. Moreover, the instrument may be attached to any other load carried by the aircraft, for example, to a fuel tank mounted onto the wing or the fuselage of the aircraft.

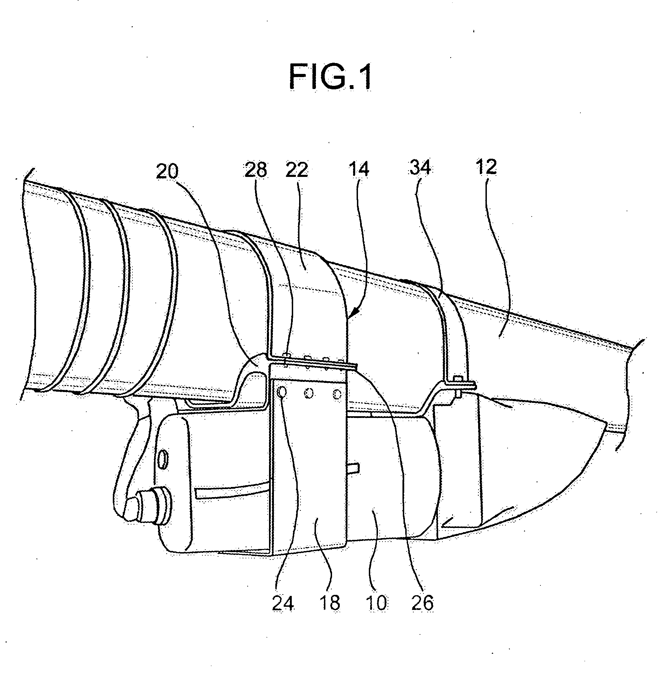

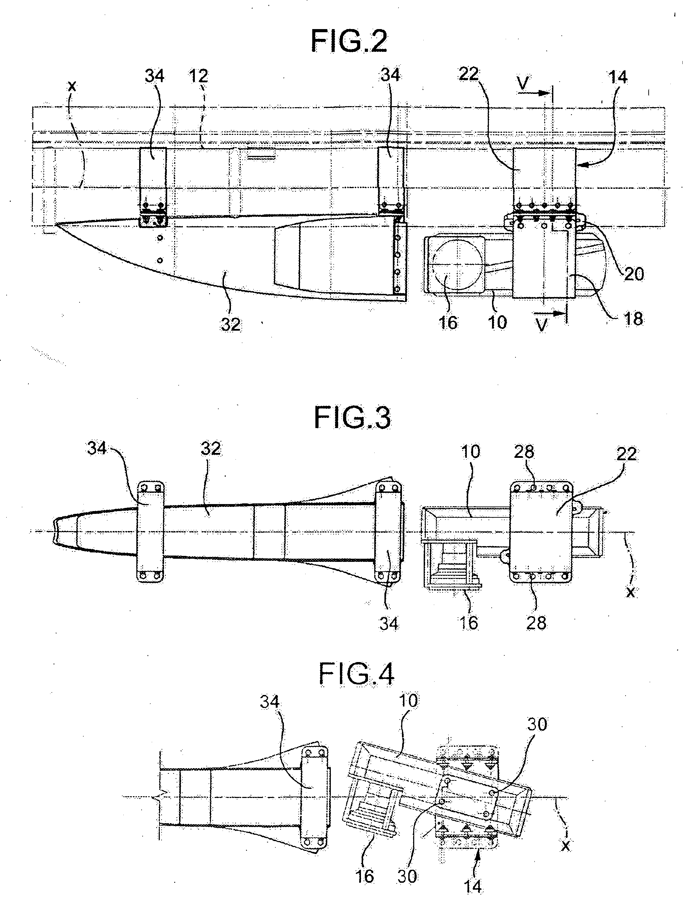

With reference first to Figures 1 to 4, a high-speed camera 10 is attached to a missile 12 (partially shown in Figure 1 and indicated only by dashed line in Figure 2) carried by a wing or fuselage of a military aircraft (not shown) by means of an attachment device 14. The high-speed camera 10 may be a camera already available on the market, such as for example a COTS camera, since the attachment device 14 can be adapted to any camera or other acquisition and/or measure instrument. It is however preferable, as in the illustrated example, the use of a camera provided with a lens 16 oriented perpendicularly to the longitudinal axis of the missile 12, indicated X in the figures. In the illustrated example, the missile 12 is an AIM9-L air-to-air missile, but it may of course be a missile of any other type.

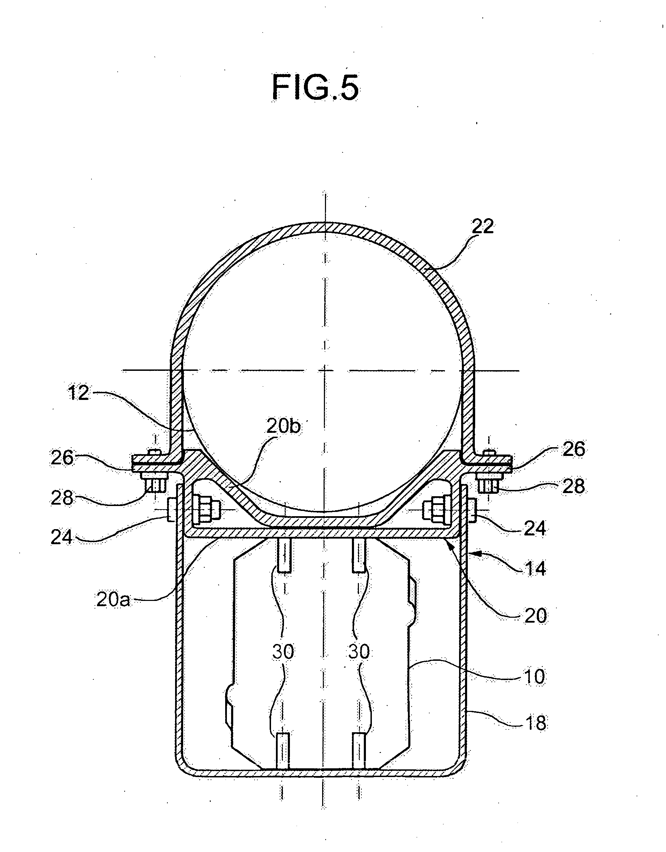

With reference now also to Figure 5, the attachment device 14 includes a support bracket 18, an intermediate member 20 and a band 22. The support bracket 18 has a substantially U-like shape and is attached to the intermediate member 20 by means of screws 24 or equivalent releasable fastening members. The intermediate member 20 preferably consists of a single piece forming a substantially flat bottom wall 20a, which holds the camera 10 from above, and a top wall 20b having a basin-like configuration adapted to mate with the circular cross-section of the missile 12. The assembly formed by the support bracket 18 and the intermediate member 20 is firmly secured to the missile 12 through the band 22, which is connected at its ends to a pair of attachment flanges 26 of the intermediate member 20 by means of screws 28 or equivalent releasable fastening members.

As shown in Figures 4 and 5, the camera 10 is attached to a base wall 18a of the bracket and to the bottom wall 20a of the intermediate member 20 by means of bolts 30, for example NAS 1102-3-10 or NAS 1203-2 bolts, the arrangement of which can be changed to allow the camera 10 to be inclined relative to the longitudinal axis X of the missile 12. Moreover, by virtue of the shape-mating between the top wall 20b of the intermediate member 20 and the circular outline of the missile 12, the whole attachment device 14 and the camera 10 carried by it can be tilted around the longitudinal axis X of the missile.

An aerodynamic element 32, the front cross-section of which fully covers the one of the camera 10 and which is suitably shaped to reduce the aerodynamic drag of the camera and of the associated attachment device, is also mounted onto the missile 12 in front of the camera 10 with respect to the flying direction of the aircraft. The aerodynamic element 30 is preferably made of carbon fibre, so as to limit the overall mass of the apparatus carried by the missile 12, and is mounted onto the missile 12 by means of a pair of bands 34. Each band 34 embraces the missile and is attached at its two ends to a pair of attachment flanges 36 of a respective intermediate member 38 joined to the aerodynamic element 32.

As will be understood in the light of the preceding description, the use of the attachment device according to the invention allows to mount a camera, or any other instrument or apparatus, onto a load carried by an aircraft, in particular onto a missile, without requiring structural changes to this latter. The attachment device is simple and not expensive and its use does not depend on the type of aircraft, but only on the sizes (diameter) of the load to which the instrument or apparatus have to be attached. Moreover, the use of the attachment device for attaching a high-speed camera to a load carried by an aircraft allows to make video recordings under test conditions which do not permit to carry Camera Pods.

Naturally, the principle of the invention remaining unchanged, the embodiments and constructional details may vary widely with respect to those described and illustrated purely by way of non-limiting example.

For example, although in the illustrated example the attachment device 14 and the aerodynamic element 32 are separate components, a variant of embodiment may however be conceived in which the aerodynamic element forms a single piece with the support bracket 18 of the attachment device 14.

## Claims

1. System for attaching an instrument or apparatus (10), such as in particular a highspeed camera, to a load (12) carried by an aircraft, such as in particular a missile, **characterized in that** it comprises
an attachment device (14) including a support structure (18, 20) and at least one band member (22) for releasably connecting the support structure (18, 20) to the load (12); and
an aerodynamic element (32) associated to the attachment device (14), the aerodynamic element (32) being adapted to be releasably attached to the load (12) in front of said instrument or apparatus (10).

2. Attachment system according to Claim 1, wherein the support structure (18, 20) of the attachment device (14) includes a support bracket (18) which is open upwards and an intermediate member (20) which is adapted to be attached to the support bracket (18) to close the support bracket (20) from above, the intermediate member (20) being arranged in the assembled condition between the instrument or apparatus (10) and the load (12).

3. Attachment system according to Claim 2, wherein the intermediate member (20) forms a substantially flat bottom wall (20a) which in the assembled condition closes the support bracket (18) from above, and a top wall (20b) which is shaped so as to mate with the outline of the load (12).

4. Attachment system according to Claim 2 or Claim 3, wherein said at least one band member (22) is adapted to be attached to the Intermediate member (20).

5. Attachment system according to Claim 4, wherein the intermediate member (20) is provided with at least one pair of attachment flanges (26) for connection to said at least one band member (22).

6. Attachment system according to any of the preceding claims, further comprising means for changing the orientation of said instrument or apparatus relative to a longitudinal axis (X) of the load (12).

7. Attachment system according to any of the preceding claims, further comprising at least one band member (34) for attaching the aerodynamic element (30) to the load (12).

8. Attachment system according to any of the preceding claims, wherein the aerodynamic element (30) forms a single piece with the support structure (18, 20).

## Patentansprüche

1. System zum Befestigen eines Instruments oder Apparats (10), wie insbesondere einer Hochgeschwindigkeitskamera, an einer von einem Luftfahrzeug getragenen Last (12), wie insbesondere einer Rakete, **dadurch gekennzeichnet, dass** es Folgendes umfasst:
eine Befestigungsvorrichtung (14), einschließlich einer Haltestruktur (18, 20) und mindestens eines Bandelements (22) zum lösbaren Verbinden der Haltestruktur (18, 20) mit der Last (12); und
ein zur Befestigungsvorrichtung (14) gehöriges aerodynamisches Element (32), wobei das aerodynamische Element (32) dazu angepasst ist, vor dem Instrument oder Apparat (10) lösbar an der Last (12) befestigt zu werden.

2. Befestigungssystem gemäß Anspruch 1, wobei die Haltestruktur (18, 20) der Befestigungsvorrichtung (14) eine Halteklammer (18), die nach oben hin offen ist, sowie ein Zwischenglied (20) umfasst, das dazu angepasst ist, an der Halteklammer (18) befestigt zu werden, um die Halteklammer (20) von oben zu verschließen, wobei das Zwischenglied (20) im montierten Zustand zwischen dem Instrument oder Apparat (10) und der Last (12) angeordnet ist.

3. Befestigungssystem gemäß Anspruch 2, wobei das Zwischenglied (20) eine im Wesentlichen flache untere Wand (20a), die im montierten Zustand die Halteklammer (18) von oben verschließt, und eine obere Wand (20b), die so geformt ist, um zum Umriss der Last (12) zu passen, bildet.

4. Befestigungssystem gemäß Anspruch 2 oder Anspruch 3, wobei dieses mindestens eine Bandelement (22) dazu angepasst ist, am Zwischenglied (20) befestigt zu werden.

5. Befestigungssystem gemäß Anspruch 4, wobei das Zwischenglied (20) mit mindestens einem Paar von Befestigungsflanschen (26) zur Verbindung mit dem mindestens einen Bandelement (22) versehen ist.

6. Befestigungssystem gemäß einem der vorhergehenden Ansprüche, welches weiters Mittel zum Ändern der Ausrichtung des Instruments oder Apparats im Verhältnis zu einer Längsachse (X) der Last (12) umfasst.

7. Befestigungssystem gemäß einem der vorhergehenden Ansprüche, welches weiters mindestens ein Bandelement (34) zum Befestigen des aerodynamischen Elements (30) an der Last (12) umfasst.

8. Befestigungssystem gemäß einem der vorhergehenden Ansprüche, wobei das aerodynamische Element (30) ein Stück mit der Haltestruktur (18, 20) bildet.

## Revendications

1. Système pour fixer un instrument ou un appareil (10), en particulier tel qu'une caméra à grande vitesse, sur une charge (12) supportée par un avion, tel qu'en particulier un missile, **caractérisé en ce qu'**il comprend :
un dispositif de fixation (14) comprenant une structure de support (18, 20) et au moins un élément de bande (22) pour raccorder de manière amovible la structure de support (18, 20) à la charge (12) ; et
un élément aérodynamique (32) associé au dispositif de fixation (14), l'élément aérodynamique (32) étant adapté pour être fixé de manière amovible à la charge (12) en face dudit instrument ou appareil (10).

2. Système de fixation selon la revendication 1, dans lequel la structure de support (18, 20) du dispositif de fixation (14) comprend une console de support (18) qui est ouverte vers le haut et un élément intermédiaire (20) qui est adapté pour être fixé sur la console de support (18) afin de fermer la console de support (18) par le dessus, l'élément intermédiaire (20) étant agencé dans la condition assemblée entre l'instrument ou appareil (10) et la charge (12).

3. Système de fixation selon la revendication 2, dans lequel l'élément intermédiaire (20) forme une paroi inférieure sensiblement plate (20a) qui, dans la condition assemblée, ferme la console de support (18) par le dessus, et une paroi supérieure (20b) qui est formée pour se coupler au profil de la charge (12).

4. Système de fixation selon la revendication 2 ou la revendication 3, dans lequel ledit au moins un élément de bande (22) est adapté pour être fixé sur l'élément intermédiaire (20).

5. Système de fixation selon la revendication 4, dans lequel l'élément intermédiaire (20) est prévu avec au moins une paire de rebords de fixation (26) pour le raccordement audit au moins un élément de bande (22).

6. Système de fixation selon l'une quelconque des revendications précédentes, comprenant en outre des moyens pour modifier l'orientation dudit instrument ou appareil par rapport à un axe longitudinal (X) de la charge (12).

7. Système de fixation selon l'une quelconque des revendications précédentes, comprenant en outre au moins un élément de bande (34) pour fixer l'élément aérodynamique (30) à la charge (12).

8. Système de fixation selon l'une quelconque des revendications précédentes, dans lequel l'élément aérodynamique (30) forme une seule pièce avec la structure de support (18, 20).
